# EUROPEAN PATENT APPLICATION

(11) **EP 4 338 822 A1**
(43) Date of publication of application: **20.03.2024**
(21) Application number: 22820146.3
(22) Date of filing: 03.06.2022
(51) Int. Cl.: B01D 63/08, B29C 65/18

(54) **MEMBRANE CARTRIDGE AND MEMBRANE CARTRIDGE MANUFACTURING METHOD**

(30) Priority: 11.06.2021 JP 2021098088
(71) Applicant: Kubota Corporation, Osaka 556-8601 (JP)
(72) Inventor: MATSUZAKI Yoshio, Amagasaki-shi, Hyogo 661-0967 (JP); SHINKAI Tadao, Amagasaki-shi, Hyogo 661-0967 (JP)
(74) Representative: von Hirschhausen, Helge
(86) International application number: PCT/JP2022/022576
(87) International publication number: WO 2022/259965

(57) **Abstract**

A membrane cartridge including: a filtration membrane (2); and a support plate (3). The support plate (3) includes a reference surface, a first joint portion (32) protruding from the reference surface, and a second joint portion (33) retreated from the reference surface, the second joint portion (33) is provided closer to an outer edge (35) of the support plate (3) than the first joint portion (32) is, at least a portion of an outer edge portion (21) of the filtration membrane (2) is joined to the support plate (3) at the second joint portion (33), and a portion of the filtration membrane (2) inward of the outer edge portion (21) is joined to the support plate (3) at the first joint portion (32).

## Description

### Technical Field

The present invention relates to a membrane cartridge and a membrane cartridge manufacturing method.

### Background Art

Devices having a membrane cartridge are commonly used as filtration devices used in sewage facilities or the like. Such membrane cartridges typically have a structure in which a filtration membrane made of a nonwoven fabric or the like is joined to a support plate made of a resin material or the like.

Examples of methods for joining the filtration membrane to the support plate include a welding method and an ultrasonic method. For example, JP 2006-231139A (Patent Document 1) discloses a technique in which a nonwoven fabric is placed on a support plate, and a hot plate is pressed onto the nonwoven fabric to weld the support plate and the nonwoven fabric to each other. In addition, JP 2001-212436A (Patent Document 2) discloses a technique in which a nonwoven fabric is placed on a support plate, and an ultrasonic horn is pressed onto the nonwoven fabric to join the support plate and the nonwoven fabric.

### Prior Art Documents

### Patent Documents

Patent Document 1: JP 2006-231139A (or US 2008/0251440A1)
Patent Document 2: JP 2001-212436A (or EP 1121971A2)

### Summary of the Invention

### Problem to be Solved by the Invention

In the welding technique as disclosed in Patent Document 1, the portion of the support plate against which the hot plate is pressed may be depressed, and a raised portion may be formed around the depressed portion. In such a case, when the membrane cartridge is used, the filtration membrane may vibrate with the raised portion serving as a point of support, and the filtration membrane may easily break. In addition, if microstructures such as protrusions are provided on the support plate in advance as disclosed in Patent Document 2 in order to avoid such phenomenon, the resin material may not spread evenly during molding, resulting in a molding failure and a decrease in the productivity of the support plate, especially in the case of complex structures.

Therefore, there is a need to realize a membrane cartridge in which the support plate is not provided with microstructures and in which the filtration membrane is less likely to break, and a method for manufacturing the membrane cartridge.

### Means for Solving Problem

A membrane cartridge according to the present invention comprises a filtration membrane; and a support plate, wherein the support plate includes a reference surface, a first joint portion protruding from the reference surface, and a second joint portion retreated from the reference surface, the second joint portion is provided closer to an outer edge of the support plate than the first joint portion is, at least a portion of an outer edge portion of the filtration membrane is joined to the support plate at the second joint portion, and a portion of the filtration membrane inward of the outer edge portion is joined to the support plate at the first joint portion.

A membrane cartridge manufacturing method according to the present invention is a membrane cartridge manufacturing method for manufacturing a membrane cartridge in which a filtration membrane is joined to a support plate that includes a reference surface, a first joint portion protruding from the reference surface, and a second joint portion retreated from the reference surface, the membrane cartridge manufacturing method comprising: placing the filtration membrane on a pre-joining support plate in which the reference surface and the first joint portion have been provided in advance; and joining between the filtration membrane and the support plate at the first joint portion and the second joint portion through forming the second joint portion by pressing a pressing member against the filtration membrane placed on the pre-joining support plate, from above the filtration membrane, so that a portion of the reference surface is retreated, wherein, in the pressing member, a first portion that faces the first joint portion is retreated from a second portion that forms the second joint portion.

With these configurations, at the first joint portion, the filtration membrane is prevented from vibrating with the raised portion around the depressed portion serving as a point of support, and a membrane cartridge in which the filtration membrane is less likely to break can be realized.

Hereinafter, preferred embodiments of the present invention will be described. However, the scope of the present invention is not limited to the preferred embodiments described below.

In one aspect of the membrane cartridge according to the present invention, it is preferable that an edge of the second joint portion closer to the outer edge of the support plate is provided with projections projecting toward the outer edge of the support plate and recesses recessed from the outer edge side, the projections and the recesses being arranged alternately.

With this configuration, the second joint portion has a certain width in the plane direction, and therefore a tolerance is provided with respect to the positional relationship in the plane direction between the filtration membrane and the support plate so that a positional relationship in which the outer edge portion of the filtration membrane abuts against the second joint portion can be realized. Therefore, variations in the dimensions of the filtration membrane, deviations in the positional relationship in the plane direction between the filtration membrane and the support plate, etc. can be tolerated to some extent, and the labor required to adjust the positional relationship between the filtration membrane and the support plate can be reduced.

In one aspect of the membrane cartridge according to the present invention, it is preferable that, the outer edge portion of the filtration membrane is connected to the support plate at areas between the projections and the recesses of the second joint portion.

With this configuration, it is easier to fix the outer edge portion of the filtration membrane to the support plate.

In one aspect of the membrane cartridge manufacturing method according to the present invention, it is preferable that the first portion is retreated with reference to the second portion by a distance smaller than a height of the first joint portion with reference to the second joint portion.

With this configuration, it is easy to achieve appropriate joining on both the first joint portion and the second joint portion.

In one aspect of the membrane cartridge manufacturing method according to the present invention, it is preferable that the pressing member has been heated.

With this configuration, the filtration membrane and the support plate can be thermally welded, and a desirable water seal can be formed.

Other features and advantages of the present invention will become apparent from the following description of exemplary and non-limiting embodiments, written with reference to the drawings.

### Brief Description of the Drawings

FIG. 1 is a perspective view of a membrane cartridge according to an embodiment.
FIG. 2 is a partial plan view of a support plate according to an embodiment.
FIG. 3 is a cross-sectional view (a cross-sectional view taken along the III-III line in FIG. 2) of the support plate according to an embodiment.
FIG. 4 is a perspective view showing a placement step of a membrane cartridge manufacturing method according to an embodiment.
FIG. 5 is a cross-sectional view showing the placement step of the membrane cartridge manufacturing method according to an embodiment.
FIG. 6 is a cross-sectional view showing a joining step of the membrane cartridge manufacturing method according to an embodiment.

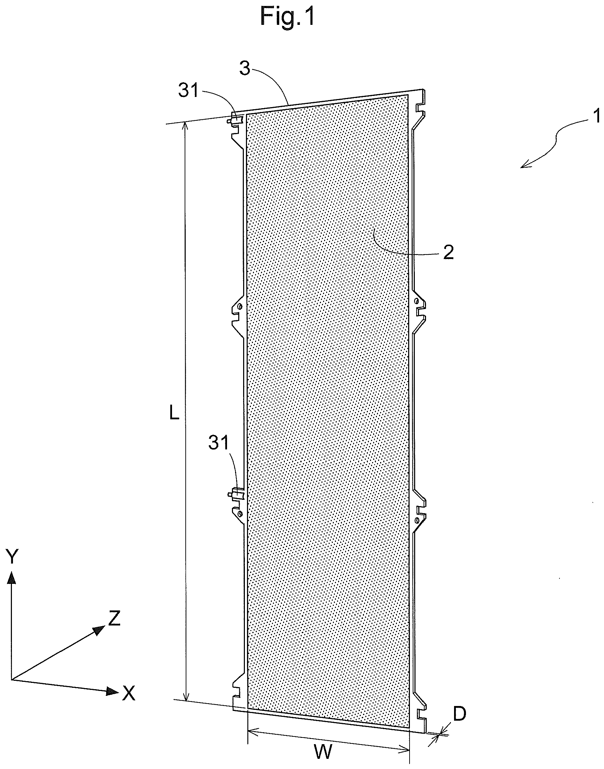

Embodiments of a membrane cartridge and a membrane cartridge manufacturing method according to the present invention will be described with reference to the drawings. The following describes an example in which the membrane cartridge according to the present invention is applied to a membrane cartridge 1 to be attached to an immersion-type membrane filtration device that is used by being immersed in the water to be treated. Note that, in FIGS. 1 to 6, the dimensional ratio of each member may be changed for the sake of description, and the dimensional ratio of each member illustrated does not necessarily reflect the embodiment. In particular, in order to make it easier to understand the structure of the protruding portion and the retreated portion, each member may be illustrated with emphasis in the protruding direction and the retreat direction. When numerical examples are given for the dimensions of each member in the present embodiment, the dimensions should be understood according to the numerical examples.

### Configuration of Membrane Cartridge

A membrane cartridge 1 according to the present embodiment has a structure in which filtration membranes 2 are joined to a support plate 3 (FIG. 1). One filtration membrane 2 is joined to each of the two sides of the support plate 3.

In use, the membrane cartridge 1 is immersed in the water to be treated. When the water to be treated passes through the filtration membranes 2, solid matters in the water to be treated remain on the primary side of the filtration membranes 2, and the filtrate from which the solid matters have been removed flows into the secondary side of the filtration membranes 2. A plurality of grooves (not shown) are provided in the central portion of the support plate 3 (the portion covered by the filtration membranes 2 in FIG. 1), and the grooves communicate with nozzles 31. The filtrate that has flowed into the secondary side of the filtration membranes 2 flows out through the grooves and the nozzles 31 to a downstream process.

As shown in FIG. 1, the membrane cartridge 1 has a plate-like shape in which a thickness D thereof is smaller than a width W and a length L thereof. In the present embodiment, the width W, the length L, and the thickness D of the membrane cartridge 1 are 500 mm, 1560 mm, and 6 mm, respectively. In the following description, the "plane direction" refers to the direction in which the filtration membranes 2 extend, which is the direction extending along the plane defined by the width W and the length L of the membrane cartridge 1 (the XY plane direction in FIG. 1) or the direction corresponding thereto. The "direction intersecting the plane direction" refers to the direction of the thickness D of the membrane cartridge 1 (the Z-axis direction in FIG. 1).

The filtration membranes 2 are sheet-shaped members provided with a plurality of fine pores. The material of the filtration membranes 2 is not particularly limited, and can be, for example, polyethylene, polypropylene, polyethylene terephthalate, or the like. Note that when the filtration membrane 2 are made of a polymeric material, a material that has been undergone chemical modification such as chlorination may be used. In addition, the size of the pores provided in the filtration membranes 2 can be appropriately selected depending on the size of the solid matters to be removed using the membrane cartridge 1, and the average pore diameter of the filtration membranes 2 can be, for example, 0.01 µm to 0.4 µm.

The support plate 3 is a plate-shaped member to which the filtration membranes 2 can be joined. The material constituting the support plate 3 is not particularly limited, and can be, for example, an ABS resin. The support plate 3 is provided with the nozzles 31, which are used to take the filtered water out of the membrane cartridge 1.

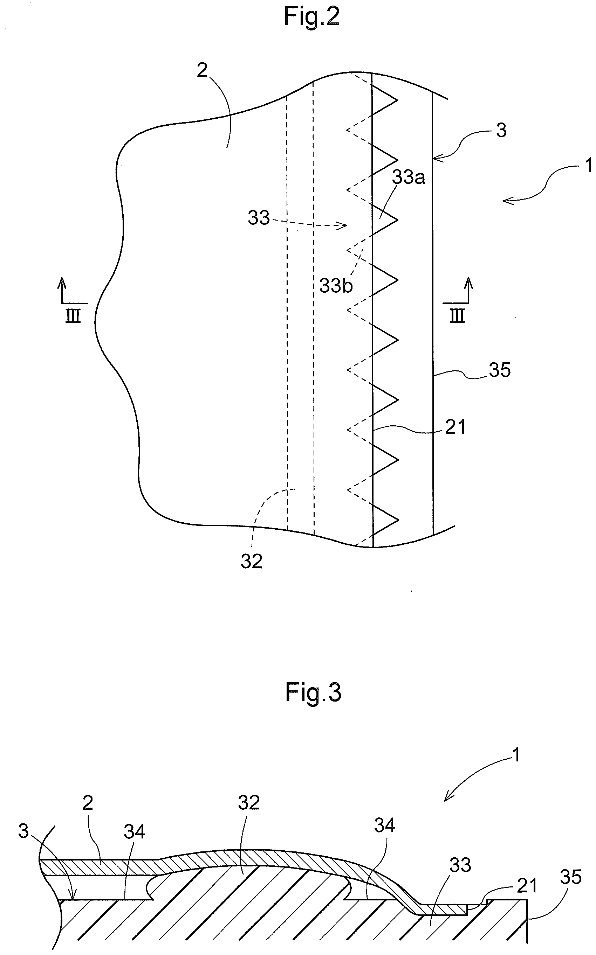

The support plate 3 includes a first joint portion 32 and a second joint portion 33 provided closer to an outer edge 35 than the first joint portion 32 is (FIGS. 2 and 3). The first joint portion 32 and the second joint portion 33 are the portions to be joined to a filtration membrane 2 when the filtration membrane 2 is joined to the support plate 3. The first joint portion 32 protrudes from the filtration surface (the plane along which the filtration membrane 2 extends), and the second joint portion 33 is retreated from the filtration surface. Note that the first joint portion 32 and the second joint portion 33 are provided on both sides of the support plate 3, corresponding to the fact that one filtration membrane 2 is joined to each of the two sides of the support plate 3.

The first joint portion 32 is provided in such a manner as to protrude with reference to a reference surface 34 on the support plate 3, i.e., in the direction along the Z axis in FIG. 1. In the present embodiment, the protrusion distance (height) of the first joint portion 32 with reference to the reference surface 34 is 0.15 mm, and the width of the first joint portion 32 is 2.6 mm. Note that the "reference surface 34" refers to a surface extending to the outer frame portion of the support plate 3 other than portions intentionally provided to protrude such as the first joint portion 32, for example. The first joint portion 32 is provided along the entire periphery of the support plate 3 in the plane direction.

The second joint portion 33 is provided in such a manner as to be retreated from the reference surface 34. In the present embodiment, the retreat distance (depth) of the second joint portion 33 with reference to the reference surface 34 is 0.15 mm in an area where the filtration membrane 2 is present, and 0.05 mm in an area where the filtration membrane 2 is not present. In the second joint portion 33, the upper surface of the filtration membrane 2 and the area where the filtration membrane 2 is not present are flush with each other. The width of the second joint portion 33 is 5 mm. Therefore, the protrusion distance (height) of the first joint portion 32 with reference to the area of the second joint portion 33 where the filtration membrane 2 is present is 0.30 mm.

The edge of the second joint portion 33 closer to the outer edge 35 of the support plate 3 is provided with projections 33a projecting toward the outer edge 35 of the support plate 3 and recesses 33b recessed from the outer edge 35 side, which are arranged alternately (FIG. 2). Although FIG. 2 shows an example in which the shape of the second joint portion 33 extending along the plane direction is a zigzag shape, the projections 33a and the recesses 33b need only be provided alternately, and the shape may be a wave shape, for example.

In the membrane cartridge 1, an outer edge portion 21 of the filtration membrane 2 is joined to the support plate 3 at areas between the projections 33a and the recesses 33b of the second joint portion 33. Since the outer edge portion 21 of the filtration membrane 2 is joined to the second joint portion 33, the outer edge portion 21 of the filtration membrane 2 can be prevented from moving due to the stress applied by the water flow or the like while the membrane cartridge 1 is in use. Such movement should be avoided as it may cause breakage of the filtration membrane 2 and loosening of the joining between the filtration membrane 2 and the support plate 3.

The portion of the filtration membrane 2 inward of the outer edge portion 21 is joined to the support plate 3 at the first joint portion 32. Since the first joint portion 32 is provided along the entire periphery of the support plate 3 in the plane direction, the joining between the filtration membrane 2 and the first joint portion 32 provides a water seal along the entire periphery of the support plate 3 in the plane direction of the support plate 3. This water seal isolates the primary side and the secondary side of the filtration membrane 2. From the viewpoint of reliably forming a water seal, the filtration membrane 2 and the support plate 3 are preferably joined by thermal fusion or ultrasonic fusion, particularly preferably by thermal fusion. Note that, since there is no depressed portion in the first joint portion, the filtration membrane does not vibrate with the raised portion around the depressed portion serving as a point of support, and a membrane cartridge 1 that does not have a structure (e.g. the raised portion) that may cause the filtration membrane 2 to break can be realized.

### Membrane Cartridge Manufacturing Method

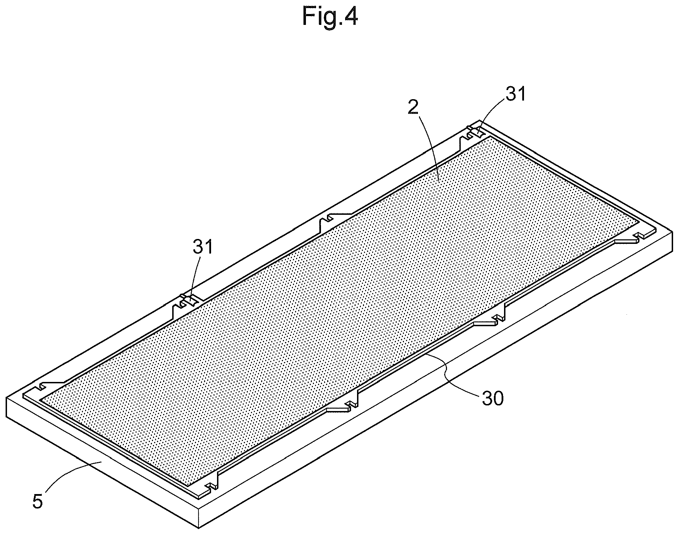

Next, a method for manufacturing the membrane cartridge 1 according to the present embodiment will be described (FIGS. 4 to 6). The method for manufacturing the membrane cartridge 1 according to the present embodiment includes a placement step and a joining step. The following describes an example in which the first filtration membrane 2 is joined to the support plate 3 to which no filtration membrane 2 has been joined. Note that, in order to distinguish between the two surfaces of the support plate 3, the surface to which the filtration membrane 2 is joined in the procedure described below will be referred to as a surface 3A.

### (1) Placement Step

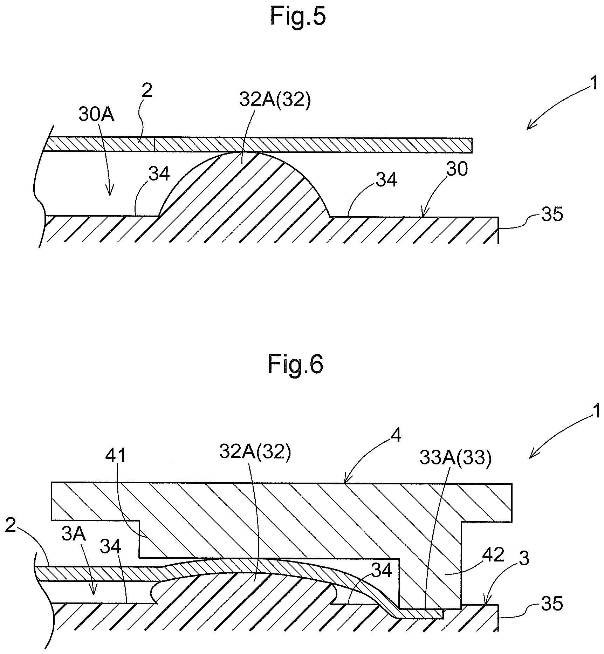

The placement step is a step of placing the filtration membrane 2 on a pre-joining support plate 30 on which the reference surface 34 and the first joint portion 32 have been provided in advance (FIGS. 4 and 5). The difference between the prejoining support plate 30 used here and the above-described support plate 3 is that the pre-joining support plate 30 is not provided with the second joint portion 33, and the empty space where the second joint portion 33 is planned to be provided is present as a portion of the reference surface 34 (FIG. 5). The pre-joining support plate 30 becomes the support plate 3 by being provided with the second joint portion 33 in the joining step, as described later.

In the placement step, first, the pre-joining support plate 30 is mounted on a frame 5. At this time, the surface 30A, which will be the surface 3A of the support plate 3 after joining, is orientated in such a manner as to face upward (FIG. 4).

Next, the filtration membrane 2 is placed on the pre-joining support plate 30 (the surface 30A) placed on the frame. Here, the positional relationship in the plane direction between the filtration membrane 2 and the pre-joining support plate 30 is set so that the outer edge portion 21 of the filtration membrane 2 abuts against the portion of the reference surface 34 on which a second joint portion 33A is planned to be provided.

### (2) Joining Step

The joining step is the step in which a pressing member 4 is pressed against the filtration membrane 2 placed on the pre-joining support plate 30 (the surface 30A), from above the filtration membrane 2, so that a portion of the reference surface 34 is retreated and the second joint portion 33 is formed, and the joining between the filtration membrane 2 and the support plate 3 is complete at the first joint portion 32 and the second joint portion 33 (FIG. 6). In the present embodiment, the pressing member 4 is heated at a set temperature of 170 °C to 190 °C, and therefore the filtration membrane 2 and the support plate 3 in the membrane cartridge 1 are thermally fused (an example of joining). Note that the means for heating the pressing member 4 may be any known means. For example, known heating means such as an electric heater or steam piping may be provided in the pressing member 4.

The pressing member 4 includes a first portion 41 that faces a first joint portion 32A and a second portion 42 that faces the empty space (a portion of the reference surface 34) where the second joint portion 33A is planned to be provided, and the first portion 41 is provided in such a manner as to be retreated from the second portion 42 (FIG. 6). More specifically, the retreat distance of the first portion 41 with reference to the second portion 42 is 0.3 mm. This is smaller than 0.5 mm, which is the protrusion distance (height) of the first joint portion 32 from the reference surface 34 of the pre-joining support plate 30. Note that the first portion 41 has a closed curve shape when viewed from below in FIG. 6, corresponding to the fact that first joint portion 32A is provided along the entire periphery of the support plate 3 in the plane direction. In addition, the second portion 42 is provided in a zigzag shape, corresponding to the fact that the second joint portion 33A is to be formed in a zigzag shape.

When the pressing member 4 is pressed against the filtration membrane 2 placed on the pre-joining support plate 30 (the surface 30A), from above the filtration membrane 2, first, the filtration membrane 2 is pressed by the first portion 41 against the first joint portion 32A. Next, the filtration membrane 2 is pressed by the second portion 42 against the reference surface 34 located outside the first joint portion 32A with a delay corresponding to 0.2 mm, and a portion of the reference surface 34 is retreated to form the second joint portion 33A (FIG. 6). Thus, the first joint portion 32A can be reliably formed. The second portion 42 has a large area and is not easily pushed in. Therefore, it acts as a brake and excessive pushing can be avoided. As a result, excessive deformation of the first joint portion 32A during joining (welding) can be avoided, so that tearing or peeling of the filtration membrane 2, which may occur due to such deformation, is less likely to occur.

In the present embodiment, as a result of the second portion 42 being provided in a zigzag shape, tolerance is provided with respect to the positional relationship in the plane direction between the filtration membrane 2 and the pre-joining support plate 30 so that a positional relationship can be realized in which the outer edge portion 21 of the filtration membrane 2 abuts against the second portion 42 when the pressing member 4 is pressed against the pre-joining support plate 30. Therefore, variations in the dimensions of the filtration membrane 2 and deviations in the positional relationship in the plane direction between the filtration membrane 2 and the pre-joining support plate 30 can be tolerated to some extent, so that no excessive labor is required to adjust the positional relationship between the filtration membrane 2 and the pre-joining support plate 30 in the placement step.

Note that the method for joining the second filtration membrane 2 to the opposite surface is the same as the above-described placement step and joining step.

### Other Embodiments

Finally, other embodiments of the membrane cartridge manufacturing method according to the present invention will be described. Note that the configurations disclosed in each of the embodiments below can be applied in combination with the configurations disclosed in other embodiments as long as no contradiction occurs.

The above embodiment describes, as an example, a configuration in which the second joint portion 33 includes the projections 33a and the recesses 33b. However, the shape of the second joint portion according to the present invention is not limited to the above example, and may be, for example, a band shape. In addition, the portion where the outer edge portion of the filtration membrane and the second joint portion are joined is not limited as long as it is within the range of the second joint portion.

The above embodiment describes, as an example, a configuration in which the pressing member 4 is configured so that the retreat distance of the first portion 41 with reference to the second portion 42 is smaller than the height of the first joint portion 32 from the reference surface 34. However, in the membrane cartridge manufacturing method according to the present invention, the shape of the pressing member is not particularly limited.

The above embodiment describes, as an example, a configuration in which the pressing member 4 is heated and the filtration membrane 2 and the support plate 3 are welded. However, in the membrane cartridge manufacturing method according to the present invention, the method for joining the filtration membrane and the support plate is not particularly limited.

Regarding other configurations, it should be understood that the embodiments disclosed herein are illustrative in all respects, and the scope of the present invention is not limited thereby. Those skilled in the art will easily understand that modifications can be made as appropriate without departing from the gist of the present invention. Therefore, other embodiments that are modified without departing from the gist of the present invention are naturally included within the scope of the present invention.

### Industrial Applicability

The present invention can be used as a method for manufacturing a membrane cartridge that is to be attached to an immersion-type membrane filtration device, for example.

### Description of Reference Signs

1: Membrane Cartridge
2: Filtration Membrane
21: Outer Edge Portion of Filtration Membrane
3: Support Plate
3A: Surface (Where Filtration Membrane is Provided)
30: Pre-Joining Support Plate
30A: Surface (where Filtration Membrane is Provided)
31: Nozzle
32: First Joint Portion
32A: First Joint Portion (on Surface 3A side)
33: Second Joint Portion
33A: Second Joint Portion (on Surface 3A side)
33a: Projection
33b: Recess
34: Reference Surface
35: Outer Edge of Support Plate
4: Pressing Member
41: First Portion
42: Second Portion
5: Frame

## Claims

1. A membrane cartridge comprising:
a filtration membrane; and
a support plate,
wherein the support plate includes a reference surface, a first joint portion protruding from the reference surface, and a second joint portion retreated from the reference surface,
the second joint portion is provided closer to an outer edge of the support plate than the first joint portion is,
at least a portion of an outer edge portion of the filtration membrane is joined to the support plate at the second joint portion, and
a portion of the filtration membrane inward of the outer edge portion is joined to the support plate at the first joint portion.

2. The membrane cartridge according to claim 1,
wherein an edge of the second joint portion closer to the outer edge of the support plate is provided with projections projecting toward the outer edge of the support plate and recesses recessed from the outer edge side, the projections and the recesses being arranged alternately.

3. The membrane cartridge according to claim 2,
wherein the outer edge portion of the filtration membrane is joined to the support plate at areas between the projections and the recesses of the second joint portion.

4. A membrane cartridge manufacturing method for manufacturing a membrane cartridge in which a filtration membrane is joined to a support plate that includes a reference surface, a first joint portion protruding from the reference surface, and a second joint portion retreated from the reference surface, the membrane cartridge manufacturing method comprising:
placing the filtration membrane on a pre-joining support plate in which the reference surface and the first joint portion have been provided in advance; and
joining between the filtration membrane and the support plate at the first joint portion and the second joint portion through forming the second joint portion by pressing a pressing member against the filtration membrane placed on the pre-joining support plate, from above the filtration membrane, so that a portion of the reference surface is retreated,
wherein, in the pressing member, a first portion that faces the first joint portion is retreated from a second portion that forms the second j oint portion.

5. The membrane cartridge manufacturing method according to claim 4,
wherein the first portion is retreated with reference to the second portion by a distance smaller than a height of the first joint portion from the reference surface.

6. The membrane cartridge manufacturing method according to claim 5,
wherein the pressing member has been heated.
